# DEMANDE DE BREVET EUROPEEN

(11) **EP 2 484 605 A1**
(43) Date de publication de la demande: **08.08.2012**
(21) Numéro de dépôt: 11000840.6
(22) Date de dépôt: 03.02.2011
(51) Int. Cl.: B65D 85/804, A47J 31/06, A47J 31/36

(54) **Capsule d'infusion pré-remplie, procédé de fabrication, dispositif associé et chambre d'infusion adaptée**

(71) Demandeur: Samar Technologies Ltd., 3107 Neapoli - Limassol (CY)
(72) Inventeur: La désignation de l'inventeur n'a pas encore été déposée
(74) Mandataire: Delaveau, Sophie

(57) **Abrégé**

L'invention concerne principalement une capsule d'infusion pré-remplie apte à être reçue dans une chambre d'infusion adaptée d'un groupe d'infusion et est essentiellement caractérisée en ce qu'elle comprend un corps (2) s'étendant depuis une ouverture principale (4) jusqu'à une paroi de fond (5) comportant un unique perçage traversant (10a,10b), en ce qu'elle comporte des moyens de détrompage (8) garantissant un positionnement obligatoire univoque de la dite capsule (la,1b) dans une chambre d'infusion associée (60), et en ce que le dit perçage traversant (10a,10b) est décalé par rapport à l'axe principal (XX') de la capsule (la,1b) de façon à adopter soit une première position (A), soit au moins une seconde position (B) différente de la première position (A).
L'invention porte également sur un procédé de fabrication d'une telle capsule, un dispositif pour mettre en oeuvre ce procédé et une chambre d'infusion adaptée à cette capsule.

## Description

L'invention concerne principalement une capsule d'infusion pré-remplie.

L'invention concerne également un procédé de fabrication d'une telle capsule ainsi que le dispositif permettant la mise en oeuvre de ce procédé.

L'invention porte en outre sur une chambre d'infusion adaptée à une telle capsule et assurant l'écoulement de la boisson infusée.

Les capsules de café pré-remplie destinées à préparer instantanément des cafés de type « expresso » sont bien connues de l'art antérieur.

Ces capsules sont utilisées dans un dispositif adapté comportant notamment une chambre d'infusion munie d'un circuit d'écoulement de la boisson infusée.

Généralement, ces dispositifs permettent également de préparer des cafés de sélections différentes tels que de l'arabica, du robusta, un mélange d'arabica et de robusta, du décaféiné, etc.

Mais le circuit d'écoulement de la boisson étant unique, la boisson réalisée contient des résidus des sélections de café précédemment préparées.

Le même problème se pose dans les dispositifs de préparation instantanée de thé.

Ces dispositifs à circuit d'écoulement unique sont ainsi le plus souvent uniquement adaptés à la préparation d'un seul type d'infusion, par exemple soit du café, soit du thé.

Or il peut être avantageux de pouvoir préparer avec le même dispositif, plusieurs types différents d'infusion, par exemple du café et du thé.

Un dispositif de ce type est décrit dans la publication EP2083662. La chambre d'infusion de ce dispositif prévoit deux voies hydrauliques indépendantes comportant chacune des extrémités de perçage de la paroi de fond de la capsule.

Un premier type de capsule est prévue pour que la première des deux voies hydraulique puisse percer la paroi de fond, l'extrémité de la deuxième voie hydraulique étant alors logée dans un évidemment borgne réalisée sur la paroi de fond de la capsule.

Un deuxième type de capsule est également prévu pour lequel l'évidemment borgne est situé cette fois en regard de l'extrémité de la première voie hydraulique de sorte l'écoulement de l'infusion est réalisée au niveau de la deuxième voie hydraulique dont l'extrémité a percé la paroi de fond de cette capsule.

Néanmoins, dans ce système, le perçage répété des capsules peut conduire à une diminution des performances de l'écoulement notamment en raison de l'usure des extrémités de perçages selon le matériau dans lequel elles sont réalisées et de l'étanchéité de l'écoulement quie peut s'avérer insuffisante au niveau de l'orifice réalisé par perçage de la paroi de fond de la capsule.

Dans ce contexte, la présente invention vise une capsule d'infusion pré-remplie permettant de pallier les inconvénients précités et adaptée à la préparation de plusieurs types d'infusion.

L'invention vise également un procédé de fabrication simple à mettre en oeuvre d'une telle capsule pré-remplie.

L'invention vise en outre un dispositif adapté à ce procédé de fabrication.

Enfin, l'invention vise une chambre d'infusion adaptée à la capsule précitée.

A cet effet, la capsule d'infusion pré-remplie de l'invention apte à être reçue dans une chambre d'infusion adaptée d'un groupe d'infusion est caractérisée en ce qu'elle comprend un corps s'étendant selon un axe principal depuis une ouverture principale jusqu'à une paroi de fond comportant un unique perçage traversant, en ce qu'elle comporte des moyens d'obturation de l'ouverture principale de la capsule et des moyens d'obturation amovibles du perçage traversant, en ce qu'elle comporte des moyens de détrompage garantissant un positionnement obligatoire univoque de la dite capsule dans une chambre d'infusion associé , et en ce que le dit perçage traversant est décalé par rapport à l'axe principal de la capsule de façon à adopter soit une première position, soit au moins une seconde position différente de la première position.

La capsule de l'invention peut également comporter les caractéristiques optionnelles suivantes considérées isolément ou selon toutes les combinaisons techniques possibles :
- la paroi de fond comporte une rainure décalée latéralement par rapport à l'axe principal de la capsule et formant moyen de détrompage de la dite capsule.
   - l'unique perçage traversant est disposé :
      - soit selon la première position dans laquelle le perçage traversant est décalé d'un axe qui est perpendiculaire à l'axe principal de la rainure et qui passe par l'axe principal de la dite capsule,
      - soit selon la seconde position dans laquelle le perçage traversant est en position symétrique à la première position par rapport à l'axe perpendiculaire à l'axe principal de la rainure.
   - le corps de la capsule est réalisé en une seule pièce en un matériau thermoplastique, la dite capsule comporte une collerette faisant saille qui délimite l'ouverture principale et un opercule principal imperméable aux liquides fixé sur la face supérieure de la collerette obturant hermétiquement l'ouverture principale de la capsule, la dite capsule comporte un opercule préhensible imperméable aux liquides, fixé sur la face externe de la paroi de fond et obturant le perçage traversant, le dit opercule préhensible comportant des moyens de préhension lui permettant d'être détaché de la paroi de fond en découvrant le perçage traversant, et la dite capsule comporte un filtre perméable aux liquides et fixé dans le corps de la capsule en appui contre la face interne de la paroi de fond de la dite capsule obligeant tout liquide s'écoulant à travers le perçage depuis l'intérieur de la capsule à traverser le filtre.

L'invention porte en outre sur un procédé de fabrication d'une capsule précédemment définie qui comprend au moins les étapes de :
- fabrication du corps de la capsule,
- fabrication des moyens de détrompage de façon concomitante ou non avec l'étape de fabrication du corps de la capsule,
- perçage de la paroi de fond de la capsule selon :
   o soit une première position décalée par rapport à l'axe principal de la capsule,
   o soit au moins une deuxième position autrement décalée par rapport à l'axe principal de la capsule,
- pose et fixation des moyens d'obturation amovibles du perçage traversant contre la face externe de la paroi de fond,
- remplissage de la capsule par :
   o soit une première infusion introduite dans le corps de la capsule dont le perçage traversant est disposé selon la première position,
   o soit une seconde infusion, différente de la première infusion, introduite dans le corps de la capsule dont le perçage traversant est disposé selon la deuxième position,
- pose et fixation des moyens d'obturation de l'ouverture principale.

Le procédé de l'invention peut également comporter les caractéristiques optionnelles suivantes considérées isolément ou selon toutes les combinaisons techniques possibles :
- l'étape de fabrication du corps de la capsule et les moyens de détrompage sont réalisés par thermoformage à partir d'une bande de film thermoplastique, et ultérieurement à l'étape de pose et de fixation des moyens d'obturation de l'ouverture principale, le procédé comprend une étape de découpage de la capsule afin de désolidariser la dite capsule de la bande de film thermoplastique.
- l'étape de remplissage de la capsule par la première infusion est réalisé par translation rotative d'une première vis sans fin supportant l'infusion vers et jusqu'au corps de la capsule, et l'étape de remplissage de la capsule par la seconde infusion est réalisé par translation rotative d'une seconde vis sans fin supportant l'infusion vers et jusqu'au corps de la capsule.
- l'opération de perçage de la paroi de fond selon la première position consiste à réaliser un perçage traversant décalé d'un axe qui est perpendiculaire à l'axe principal de la rainure et qui passe par l'axe principal de la dite capsule, et l'opération de perçage de la paroi de fond selon la seconde position consiste à réaliser un perçage traversant autrement décalé de l'axe qui est perpendiculaire à l'axe principal de la rainure, étant entendu que les première et seconde positions sont symétriques par rapport à cet axe perpendiculaire à l'axe principal de la rainure.

L'invention porte également sur un dispositif pour mettre en oeuvre le procédé de fabrication précédemment définit qui comprend au moins :
- des moyens de fabrication du corps de la capsule,
- des moyens de fabrication des moyens de détrompage,
- des moyens de perçage de la paroi de fond de la capsule :
   o soit à une première position décalée par rapport à l'axe principal de la capsule,
   o soit à au moins une seconde position autrement décalée par rapport à l'axe principal de la capsule,
- des moyens de pose et de fixation des moyens d'obturation amovibles du perçage traversant contre la face externe de la paroi de fond de la capsule,
- des premiers moyens de remplissage pour remplir la capsule d'une première infusion lorsque le perçage traversant est disposé selon la première position,
- au moins des second moyens de remplissage pour remplir la capsule d'une seconde infusion lorsque le perçage traversant est disposé selon la seconde position, et
- des moyens de pose et de fixation des moyens d'obturation de l'ouverture principale.

Le dispositif de l'invention peut également comporter les caractéristiques optionnelles suivantes considérées isolément ou selon toutes les combinaisons techniques possibles :
- le dispositif comporte des moyens de thermoformage du corps de la capsule à partir d'une bande de film thermoplastique, ces moyens de thermoformage incluant les moyens de fabrication des moyens de détrompage, et il comporte des moyens de découpage de la capsule permettant, après la fixation des moyens d'obturation de l'ouverture principale, de désolidariser la dite capsule de la bande de film thermoplastique.
- les moyens de perçage de la paroi de fond de la capsule soit à la première position, soit à la au moins seconde position, comprennent un système de découpe adapté et un système de déplacement du dit système de découpe entre une première disposition apte à réaliser le perçage à la première position, et une seconde disposition apte à réaliser le perçage à la seconde position.
- les premier moyens de remplissage pour remplir la capsule d'une première infusion comprennent une cuve remplie de la première infusion dont la partie inférieure présente une buse de remplissage à l'intérieure de laquelle une vis sans fin reliée à la cuve forme distributeur de la première infusion dans la capsule par translation de cette vis sans fin transportant la première infusion vers et dans le corps de la capsule, les second moyens de remplissage pour remplir la capsule d'une seconde infusion comprennent une cuve remplie de la seconde infusion dont la partie inférieure présente une buse de remplissage à l'intérieure de laquelle une vis sans fin reliée à la cuve forme distributeur de la seconde infusion dans la capsule par translation de cette vis sans fin transportant la seconde infusion vers et dans le corps de la capsule, et il comprend un système de commande de l'activation des premier ou des second moyens de remplissage selon que le perçage de la paroi de fond de la capsule est à la première ou à la seconde position.

L'invention porte en outre sur une chambre d'infusion apte à recevoir la capsule précédemment définie qui comporte une première voie hydraulique d'écoulement de l'infusion liquide apte à être reliée au perçage traversant de la capsule lorsque ce perçage traversant est dans une première position, et elle comporte une seconde voie hydraulique distincte hydrauliquement de la première voie hydraulique, apte à être reliée au perçage traversant de la capsule lorsque ce perçage traversant est dans une seconde position différente de la première position et les première et seconde voies hydraulique sont aptes à ne pas assurer leur fonction d'écoulement de la boisson lorsqu'elles ne sont pas reliées au perçage traversant correspondant.

La chambre d'infusion de l'invention peut également comporter les caractéristiques optionnelles suivantes considérées isolément ou selon toutes les combinaisons techniques possibles :
- les première et seconde voies hydrauliques sont fixes, et les extrémités respectives des première et seconde voies hydrauliques comportent un bord souple et étanche permettant d'une part d'assurer l'écoulement de la boisson hors de la capsule lorsque la première ou la seconde voie hydraulique est reliée au perçage traversant correspondant de la capsule, et d'autre part de s'apposer contre la paroi de fond de la capsule sans l'endommager lorsque la première ou la seconde voie hydraulique n'est pas reliée au perçage traversant correspondant de la capsule.
- la première voie hydraulique se trouve en regard de du perçage traversant dans sa première position lorsque la capsule est en place dans la dite chambre d'infusion, et la seconde voie hydraulique se trouve en regard du perçage traversant dans sa seconde position lorsque la capsule est en place dans la dite chambre d'infusion.

L'invention porte enfin sur un distributeur d'infusion, tel que du thé et/ou du café qui comporte une chambre d'infusion telle que précédemment définie.

D'autres caractéristiques et avantages de l'invention ressortiront clairement de la description qui en est donnée ci-dessous, à titre indicatif et nullement limitatif, en référence aux figures annexées sur lesquelles :
- la figure 1 est une représentation schématique en perspective d'une capsule de l'invention représentée sans opercule préhensible et destinée à contenir un premier type d'infusion,
- la figure 2 est une représentation schématique en perspective d'une capsule de l'invention représentée sans opercule préhensible et destinée à renfermer un second type d'infusion,
- la figure 3 est une vue schématique en coupe de la capsule de l'invention représentée avec un opercule préhensible selon la ligne III-III de la figure 2,
- la figure 4 est un diagramme schématique des principales étapes du procédé de fabrication la capsule de l'invention des figures 2 et 3,
- la figure 5 est une représentation schématique en perspective partiellement éclatée de la chambre d'infusion de l'invention,
- la figure 6 est une vue de dessous de la capsule de la figure 1,
- la figure 7 est une vue en coupe de la capsule de la figure 6 en place dans la chambre d'infusion de la figure 5,
- la figure 8 est une vue de dessous de la capsule de la figure 2, et
- la figure 9 est une vue en coupe de la capsule de la figure 8 en place dans la chambre d'infusion de la figure 5.

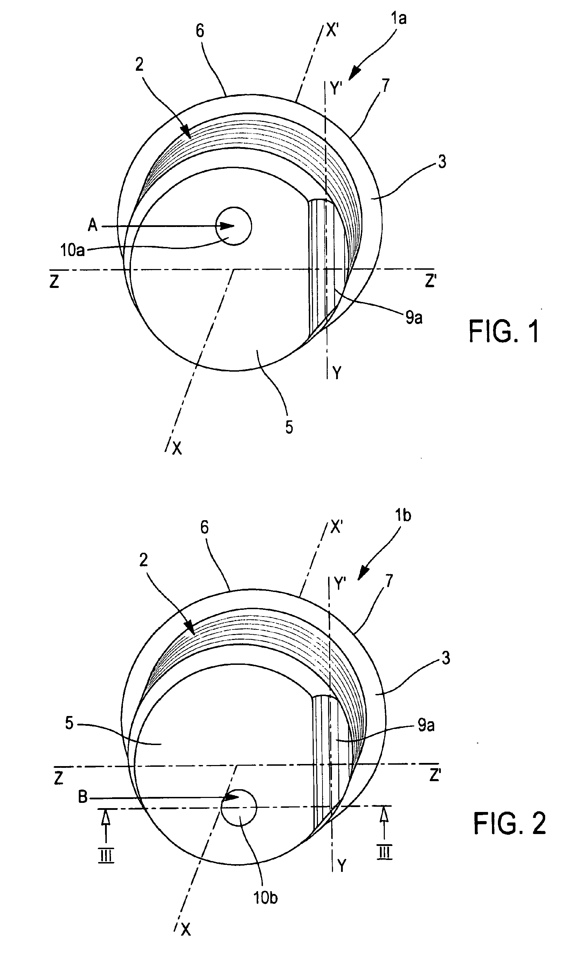

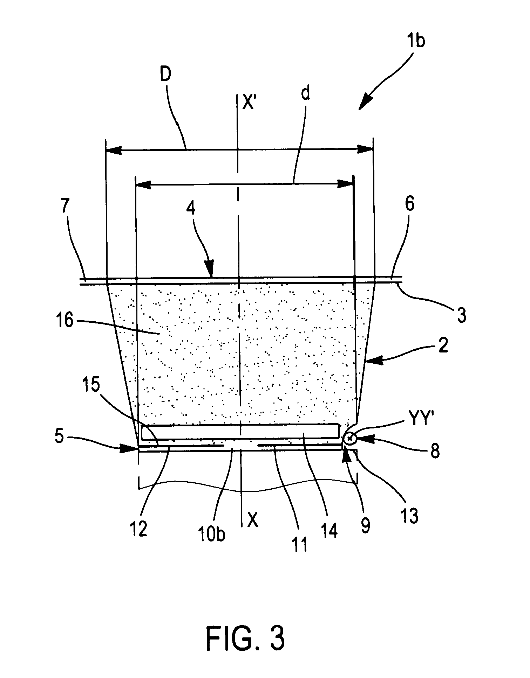

En référence aux figures 1 à 3, la capsule de l'invention 1a, 1b comprend un corps 2 réalisé en une seule pièce en un mélange de polypropylène, polyéthylène et d'un copolymère d'éthylène d'alcool vinylique. Le corps 2 s'étend selon un axe principal XX' et comporte une collerette 3 faisant saille qui délimite une ouverture principale 4 (figure 3) et qui se prolonge par une paroi latérale coaxiale se terminant par une paroi de fond 5.

Le diamètre moyen D pris au niveau de l'ouverture principale 4 est supérieur au diamètre moyen d de la paroi de fond 5.

La capsule 1a,1b comporte en outre un opercule principal 6 imperméable aux liquides, fixé par soudage thermique sur la face supérieure 7 de la collerette 3 et obturant hermétiquement l'ouverture principale 4 de la capsule 1a,1b.

La paroi de fond 5 de la capsule 1a, 1b comporte une rainure 8 à section en demi U qui s'étend selon un axe principal YY' au niveau du bord 9 de cette paroi de fond 5. La rainure 8 est ainsi décalée par rapport à l'axe principal XX' de la capsule 1a, 1b.

Par ailleurs, l'utilisation d'un matériau thermoplastique imperméable aux liquides pour réaliser l'opercule principal 6 et la présence de l'opercule préhensible 11 obturant le perçage 10a,10b permet d'isoler de façon étanche le café de l'extérieur de la capsule lui permettant de conserver ses propriétés et sa saveur qu'il ne soit nécessaire d'emballer la capsule jusqu'à son utilisation.

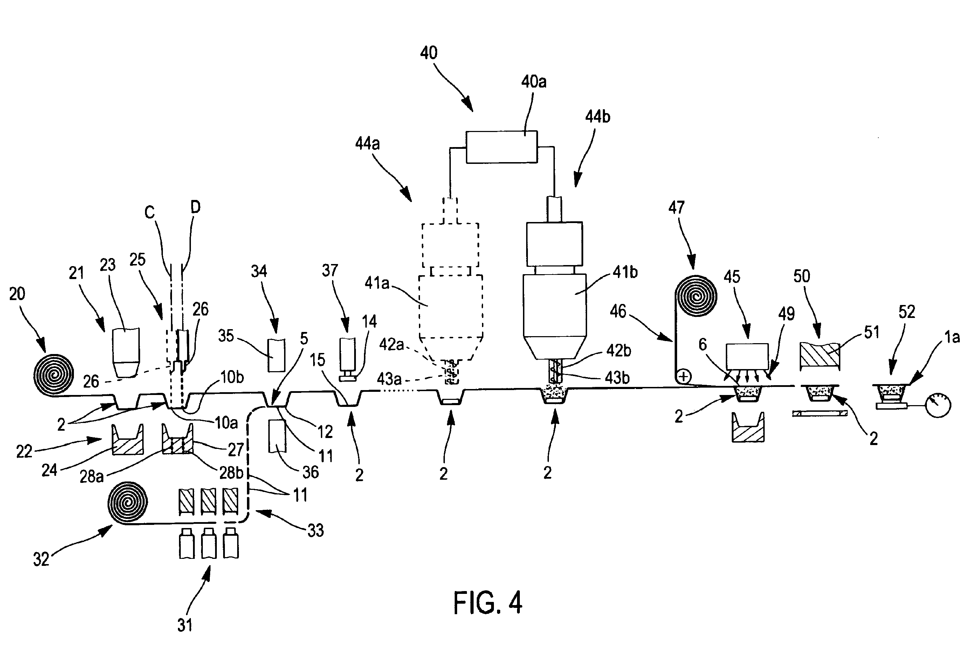

On décrit les étapes du procédé de fabrication de la capsule de l'invention 1a,1b et le dispositif associé de l'invention en référence à la figure 4.

Une bande de film thermoplastique 20 sous forme de rouleau est déroulée et subie en premier lieu une étape de fabrication par thermoformage 21 du corps 2 de la capsule 1a,1b au cours de laquelle un moule 22 muni d'une partie supérieure 23 et d'une partie inférieure 24 sont chauffés et viennent enserrer la bande de film thermoplastique 20 formant ainsi le corps 2 de la capsule 1b.

Les parties supérieure 23 et inférieure 24 du moule 22 sont de forme adaptée pour que soit réalisée au cours de cette opération de thermoformage la rainure de détrompage 8 de la capsule 1a,1b. Cette rainure 8 et les moyens coopérant des parties supérieure 23 et inférieure 24 du moule 22 permettant de réaliser cette rainure 8 ne sont pas représentés sur la figure 4 en raison de l'angle de vue de la ligne de production.

Puis, le corps 2 de la capsule 1a, 1 b subit une opération de perçage 25 au cours de laquelle le perçage traversant 10a,10b est réalisé dans la paroi de fond 5 du corps de la capsule 1a,1b.

On décrit cette opération de perçage 25 selon que le perçage traversant 10a,10b est situé à la première position A ou à la deuxième position B. Dans ces deux cas, un poinçon coupant 26 située au dessus de la bande de film thermoplastique 20 et une matrice 27 située sous la bande de film thermoplastique 1.

La matrice 27 comporte deux évidements 28a,28b correspondant respectivement à la position A,B et à la réalisation du perçage traversant 10a, 10b selon que la capsule 1a, 1b est destinée à contenir du café ou du thé.

Le poinçon coupant 26 est apte à occuper une première position C coïncidant avec le premier évidement 28a pour réaliser la capsule 10a destinée à contenir du café. A cet effet, la matrice 27 vient en contact avec le corps 2 de la capsule 1a, le poinçon coupant 26 traverse la paroi de fond 5 du corps 2 de la capsule 1a en pénétrant dans l'évidement 28a et en formant le perçage traversant 10a.

Selon la procédé et le dispositif de l'invention, le poinçon coupant 26 est également apte à occuper une deuxième position D décalée de la première position C pour réaliser la capsule 10b destinée à contenir du thé. A cet effet, la matrice 27 vient en contact avec le corps 2 de la capsule 1b, le poinçon coupant 26 traverse la paroi de fond 5 du corps 2 de la capsule 1b en pénétrant dans l'évidement 28b et en formant le perçage traversant 10a.

Des moyens non représentés permettent de faire passer le poinçon coupant 26 de la première position C à la deuxième position D selon que l'on souhaite fabriquer des capsules de café 1a ou des capsules de thé 1 b.

Puis, l'opercule préhensible 11 est appliqué sur la face externe 12 de la paroi de fond 5 du corps 2 de la capsule, 1a,1b lors d'une opération de pose et de fixation de l'opercule préhensible 30 consistant principalement à réaliser une étape de découpe 31 d'une bande de film 32 suivie d'une étape de transport 33 de l'opercule préhensible 11 découpé depuis la zone de découpe jusqu'à proximité de la face externe 12 de la paroi de fond 5 du corps 2 de la capsule 1a,1b, suivie d'une étape de soudage thermique 34 au cours de laquelle une matrice supérieure chauffée 35 et une matrice inférieure chauffée 36 qui se font face de part et d'autre du corps de la capsule sont actionnées en mouvement jusqu'à contact avec la paroi de fond 5 pour souder par la chaleur l'opercule préhensible 11 sur la face externe 12 de la paroi de fond 5 du corps 2 de la capsule 1a,1b.

La bande de film 32 permettant de réaliser l'opercule est faite d'une couche d'aluminium recouverte d'un couche de poplypropylène. Le soudage par la chaleur de l'opercule préhensible 11 est rendu possible par les réactions chimiques induites combinées de l'action de la chaleur sur le thermoplastique formant la paroi de fond 5 de la capsule 1a,1b et de l'action de la chaleur sur le polypropylène constituant la couche externe de l'opercule préhensible 11. L'opercule préhensible 11 est ainsi maintenu en place solidement, sans qu'il ne soit nécessaire d'utiliser un quelconque matériau tiers tel qu'un adhésif par exemple.

Le contrôle du soudage est effectué par envoi d'air comprimé dans le corps de la capsule 2 et contrôle des fuites d'air au niveau de l'opercule. Les moyens effectuant ce contrôle ne sont pas représentés.

Puis, un filtre 14 réalisé en un matériau perméable aux fluides est posé dans le fond de la capsule 1a,1b en appui contre la face interne 15 de la paroi de fond 5 lors d'une opération de pose et de fixation du filtre 37. Lors de cette opération, le filtre 14 est amené à proximité de la capsules 1a, 1b et une patte d'aspiration non représentée vient saisir le filtre 14 par aspiration puis se déplace jusqu'à proximité du corps 2 de la capsule 1a,1b avant de déposer le filtre 14 contre la face interne 15 de la paroi de fond 5 de la capsule 1a,1b. Un poinçon non représenté vient alors exercer trois pressions sur le filtre 14 en direction de la paroi de fond 5 pour permettre le maintien en force du filtre 14 dans le fond de la capsule 1a,1b.

La capsule 1a,1b est ensuite remplie d'infusion lors d'une étape de remplissage de la capsule 40.

Selon la position A ou B du perçage traversant 10a,10b réalisé lors de l'opération de perçage 25, la capsule 1a,1b sera soit remplie de café, soit remplie de thé.

A cet effet, le dispositif de l'invention comporte une première cuve 41a dont la partie inférieure présente une buse de remplissage 42a à l'intérieur de laquelle une vis sans fin 43a, reliée à la première cuve 41 a, forme distributeur d'infusion dans la capsule par translation rotative de cette vis sans fin 43a. Le pas de la vis sans fin 31, le nombre de tours réalisés ainsi que la vitesse de rotation permettent d'ajuster la quantité de café introduite dans la capsule 1a. La première cuve 41 a ainsi que la buse de remplissage 42a et la vis sans fin 43a associées forment les premiers moyens de remplissage 44a.

Le dispositif de l'invention comporte en outre une seconde cuve 41 b dont la partie inférieure présente une buse de remplissage 42b à l'intérieur de laquelle une vis sans fin 43b, reliée à la seconde cuve 41 b, forme distributeur d'infusion dans la capsule par translation rotative de cette vis sans fin 43b. Le pas de la vis sans fin 31, le nombre de tours réalisés ainsi que la vitesse de rotation permettent d'ajuster la quantité de thé introduite dans la capsule 1b. La seconde cuve 41 b ainsi que la buse de remplissage 42b et la vis sans fin 43b associées forment les seconds moyens de remplissage 44b.

La vis sans fin 43a de la première cuve 41a et le nombre de tours réalisés pour le remplissage de la capsule 1a seront adaptés pour que la capsule 1b contienne un maximum de 8g de café.

La vis sans fin 43b de la seconde cuve 42a et le nombre de tours réalisés pour le remplissage de la capsule 1 b seront également adaptés pour que la capsule 1 b contienne un maximum de 5g de feuilles de thé.

Le dispositif de l'invention comporte des moyens de commande 40a qui contrôlent l'activement de l'un ou l'autre des premier 44a ou second 44b moyens de remplissage selon que la capsule 1a,1b doit être remplie de thé ou de café.

Le procédé de l'invention permet ainsi d'assurer le remplissage de la capsule 1 a, 1 b soit de café, soit de thé selon que le perçage traversant 10a,10b occupe la position A ou la position B au niveau de la paroi de fond 5 de la capsule 1a,1b.

Ce remplissage soit de café, soit de thé, s'effectue ainsi sur la même ligne de fabrication de la capsule.

Par ailleurs, la réalisation du remplissage de la capsule par l'intermédiaire d'une vis sans fin permet de faire en sorte que l'opération de remplissage respecte la cadence de la ligne de production sans la ralentir.

L'opération de remplissage 40 est suivie d'une aspiration du café sur le bord de la capsule ainsi que d'une compression du café dans la capsule, opérations non représentées sur les figures que l'homme du métier saura facilement mettre en oeuvre.

Une fois la capsule remplie de café, une opération de pose et de fixation 45 de l'opercule principal 6 sur la face externe 7 de la collerette 3 de la capsule 1a,1b est réalisée. Cette opération consiste principalement en une opération de centrage 46 d'une bande de film thermoplastique 47 réalisée en un matériau imperméable aux fluides suivie d'une opération d'application 48 de cette bande de film thermoplastique sur la capsule et d'une opération de soudage par la chaleur 49 du film thermoplastique sur la face externe 7 de la collerette 3 de la capsule 1a,1b.

L'opercule principal 6, et donc la bande de film thermoplastique, sera choisie pour présenter un motif qui diffèrera selon que la capsule 1a,1b est remplie de café ou de thé.

A cet effet, soit la bande de film thermoplastique 47 sera changée avant le début de la mise en route de la pigne de production, soit deux bandes de films thermoplastique seront prévues ainsi que des moyens permettant l'application de l'un ou l'autre de ces bandes de films thermoplastique selon la nature du contenant de la capsule 1a,1b.

La capsule 1a,1b est ensuite découpée lors d'une opération de découpage 50 au moyens d'une matrice supérieure 51 dont les bords externes sont tranchants et d'une matrice inférieure 52 qui est adaptée à la configuration de la matrice supérieure 51 de façon à venir s'opposer à la force de découpe engendrée par la matrice supérieure 51 qui est commandée en mouvement vers et jusqu'à la capsule 1 a, 1 b.

Une fois découpée, la capsule 1a subit une opération de contrôle par pesage 52 consistant à peser la capsule 1a. Chacune des opérations précédentes induit un ajout de poids très précis, ce qui permet de connaître la masse de référence d'une capsule 1a et de la comparer au poids de chacune des capsules 1a en sortie de la ligne de fabrication. Cette méthode, simple à mettre en oeuvre, permet d'effectuer un contrôle précis de la capsule puisque une infime variation de poids montre que l'une des opérations précédents n'est pas conforme et que la capsule est défectueuse. Des moyens non représentés de tris permettent de séparer les capsules conformes des capsules défectueuses.

Le dispositif et le procédé de l'invention permettent de fabriquer sur une seule ligne de production, une capsule pré-remplie soit de café, soit de thé à partir d'une bande de film thermoplastique. Le café se présentera sous forme de poudre, tandis que le thé sera sous forme de feuille pour conserver ses propriétés gustatives. Bien entendu, l'invention ne se limite pas à la fabrication de thé ou de café. On pourra également prévoir par exemple la fabrication d'infusion, de lait instantané et de chocolat, sans que cette liste ne soit limitative.

Par ailleurs, on peut prévoir ne restant dans le cadre de l'invention que la ligne de production est scindée en deux parties.

Une première partie permet de fabriquer le corps de la capsule 1a,1b. de réaliser le perçage traversant 10a,10b, de fixer l'opercule préhensible 11 et de positionner le filtre 14 au fond de la capsule 1a,1b.

La suite des opérations, en particulier les opérations de remplissage, peuvent faire l'objet d'une deuxième partie indépendante. Par conséquent, le remplissage de la capsule pourra être effectué au choix sur la même ligne de production que la fabrication du corps 2 de la capsule 1a,1b où sur une ligne différente.

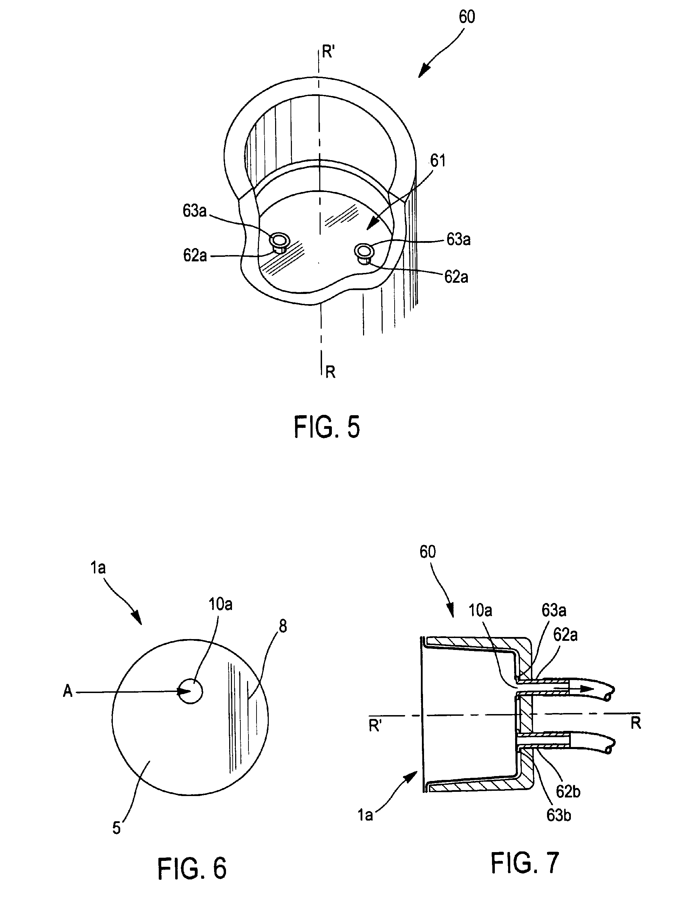

On se réfère à présente aux figures 5 à 9 pour décrire la chambre d'infusion adaptée à l'écoulement de l'infusion selon la nature, café ou thé, du contenant de la capsule 1a,1b.

En référence à la figure 5, la chambre d'infusion 60 se présente sous la forme d'un bol cylindrique s'étendant selon un axe principal RR' depuis une paroi transversale de fond 61 comportant une première voie hydraulique d'écoulement 62a et une seconde voie hydraulique d'écoulement 62b indépendante de la première voie hydraulique 62a.

Les extrémités respectives 63a,63b des première 62a et seconde 62b voies hydrauliques d'écoulement comportent chacune un bord souple et étanche permettant d'une part d'assurer de façon étanche l'écoulement de la boisson infusée lorsque la voie hydraulique correspondante 62a,62b est reliée au perçage traversant 10a,10b de la capsule 1a,1b. et d'autre part de ne pas endommager la paroi de fond 5 de la capsule 1a,1b et restant accoler à cette paroi de fond 5 lorsque la voie hydraulique correspondante 62a,62b n'est pas reliée au perçage traversant 10a,10b de la capsule 1a,1b.

Les voies hydrauliques 62a,62b traversent la paroi de fond 61 de la chambre d'infusion pour distribuer l'infusion dans le contenant de l'utilisateur.

En référence aux figures 6 et 7, la capsule 1a de la figure 1 pour laquelle le perçage traversant 10a est dans la première position A au niveau de la paroi de fond 5, est introduite dans la chambre d'infusion 60 qui comporte des moyens de détrompage non représentés coïncidant avec la rainure 8 de la capsule 1a. Ainsi, la capsule 1a ne peut être introduite dans la chambre d'infusion 60 uniquement selon une seule position angulaire autour de l'axe principal RR' de cette chambre d'infusion 60.

Des moyens non représentés bien connus de l'homme du métier permettent de maintenir en place la capsule 1a dans la chambre d'infusion 60 et de l'éjecter de cette chambre 60 lorsque l'écoulement de l'infusion est terminé.

En référence à la figure 7, la première voie hydraulique d'écoulement 62a est positionnée sur la paroi de fond 61 de cette chambre d'infusion 60 de façon à être en regard du perçage traversant 10a lorsque la capsule 1a est placée dans la chambre d'infusion 60.

La paroi de fond 5 de la capsule vient en appui contre les extrémités respectives 63a,63b des deux voies hydrauliques d'écoulement 62a,62b.

L'extrémité 63a de la première voie hydraulique d'écoulement 62a vient alors se positionner sur le bord du perçage traversant 10a permettant ainsi de relier l'intérieur de la capsule 1a à cette première voie hydraulique d'écoulement 62a.

Dans le même temps, l'extrémité 63b de la seconde voie hydraulique d'écoulement 62b vient s'apposer contre la paroi de fond 5 de la capsule 1a sans endommager cette paroi de fond 5 du fait de la souplesse du bord formant extrémité 63b de cette seconde voie hydraulique 62b.

L'infusion liquide peut ainsi s'écouler depuis l'intérieur de la capsule 1a vers l'extérieur de la chambre d'infusion 60 pour remplir un récipient de réception de cette infusion.

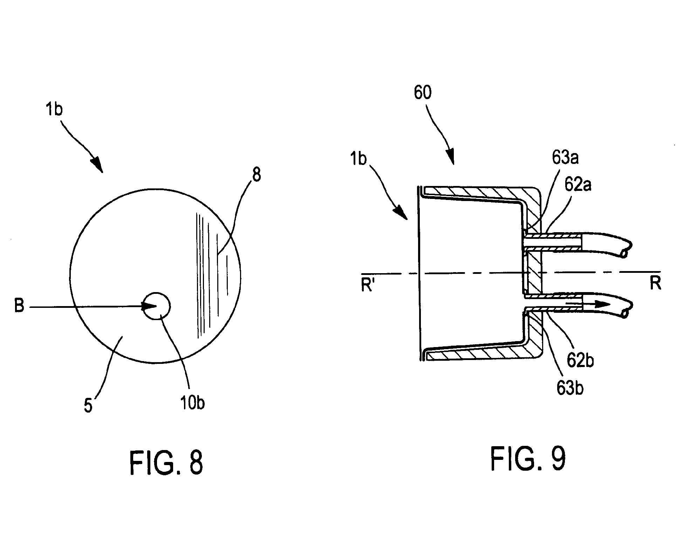

De façon correspondante, en référence aux figures 8 et 9, la capsule 1b de la figure 2 pour laquelle le perçage traversant 10b est dans la seconde position B au niveau de la paroi de fond 5 de cette capsule 1b, est introduite dans la chambre d'infusion 60

En référence à la figure 9, la seconde voie hydraulique d'écoulement 62b est positionnée sur la paroi de fond 61 de cette chambre d'infusion 60 de façon à être en regard du perçage traversant 10b lorsque la capsule 1b est placée dans la chambre d'infusion 60.

La paroi de fond 5 de la capsule 1b vient en appui contre les extrémités respectives 63a,63b des deux voies hydrauliques d'écoulement 62a,62b.

L'extrémité 63b de la seconde voie hydraulique d'écoulement 62b vient alors se positionner sur le bord du perçage traversant 10b permettant ainsi de relier l'intérieur de la capsule 1 b à cette première voie hydraulique d'écoulement 62b.

Dans le même temps, l'extrémité 63a de la première voie hydraulique d'écoulement 62a vient s'apposer contre la paroi de fond 5 de la capsule 1 b sans endommager cette paroi de fond 5 du fait de la souplesse du bord formant extrémité 63a de cette première voie hydraulique 62a.

L'infusion liquide peut ainsi s'écouler depuis l'intérieur de la capsule 1b vers l'extérieur de la chambre d'infusion 60 pour remplir un récipient de réception de cette infusion.

Ainsi, la capsule et la chambre d'infusion associée permettent de pouvoir préparer deux infusions différentes sans qu'il n'y ait pollution d'une infusion par les résidus de l'infusion précédemment préparée.

Le procédé et le dispositif de l'invention sont simples à mettre en oeuvre. Le fait de prévoir un perçage transperçant au niveau de la paroi de fond 5 de la capsules 1a,1b permet de pouvoir réaliser la capsule 1a,1b en une seule pièce. Le thermoformage permettant également la réalisation de la rainure 8 de détrompage.

Par ailleurs, la chambre d'infusion 60 est également simple à mettre en oeuvre. Tout en restant dans le cadre de l'invention, les extrémités des voies hydrauliques d'écoulement peuvent prendre une forme différente de celle décrite précédemment tant qu'elles permettent à la fois d'assurer l'écoulement de l'infusion et de ne pas endommager la paroi de fond lorsqu'elles n'assurent pas l'écoulement de l'infusion.

Bien entendu, en restant dans le cadre de l'invention, on peut prévoir une pluralité de perçages transperçant réalisés sur la paroi de fond 5 de la capsule 1a,1b et un nombre correspondant de voies hydrauliques d'écoulement dans la chambre d'infusion, chacune de ces voies hydrauliques étant positionnée dans la chambre d'infusion de façon à pouvoir chacune être reliée à un perçage transperçant spécifique.

Le procédé et le dispositif de l'invention seront facilement adaptés, notamment en prévoyant que le poinçon coupant 26 utilisé lors de l'opération de perçage puisse adopter un nombre de positions nécessaire pour réaliser la pluralité de perçages transperçant. Il sera également prévu des moyens de remplissage supplémentaires conforme aux moyens de remplissage précédemment décrits permettant, lorsqu'ils sont activés de remplir la capsule d'une infusion particulière.

## Revendications

1. Capsule d'infusion pré-remplie apte à être reçue dans une chambre d'infusion adaptée d'un groupe d'infusion, **caractérisée en ce qu'**elle comprend un corps (2) s'étendant selon un axe principal (XX') depuis une ouverture principale (4) jusqu'à une paroi de fond (5) comportant un unique perçage traversant (10a,10b), **en ce qu'**elle comporte des moyens d'obturation (6) de l'ouverture principale (4) de la capsule (1a,1b) et des moyens d'obturation amovibles (11) du perçage traversant (10a,10b), **en ce qu'**elle comporte des moyens de détrompage (8) garantissant un positionnement obligatoire univoque de la dite capsule (1a,1b) dans une chambre d'infusion associé (60), et **en ce que** le dit perçage traversant (10a,10b) est décalé par rapport à l'axe principal (XX') de la capsule (1a,1b) de façon à adopter soit une première position (A), soit au moins une seconde position (B) différente de la première position (A).

2. Capsule d'infusion pré-remplie selon la revendication 1, **caractérisée en ce que** la paroi de fond (5) comporte une rainure (8) décalée latéralement par rapport à l'axe principal (XX') de la capsule (1a,1b) et formant moyen de détrompage (8) de la dite capsule.

3. Capsule d'infusion pré-remplie selon la revendication 2, caractérisée en ce l'unique perçage traversant (10a,10b) est disposé :
- soit selon la première position (A) dans laquelle le perçage traversant (10a) est décalé d'un axe (ZZ') qui est perpendiculaire à l'axe principal de la rainure (YY') et qui passe par l'axe principal (XX') de la dite capsule (1a,1b),
- soit selon la seconde position (B) dans laquelle le perçage traversant (10b) est en position symétrique à la première position (A) par rapport à l'axe (ZZ') perpendiculaire à l'axe principal (YY') de la rainure (8).

4. Capsule d'infusion pré-remplie selon l'une quelconque des revendications précédentes, **caractérisée en ce que caractérisée en ce que** le corps (2) de la capsule (1a,1b) est réalisé en une seule pièce en un matériau thermoplastique, **en ce qu'**elle comporte une collerette faisant saille (3) qui délimite l'ouverture principale (4) et un opercule principal (6) imperméable aux liquides fixé sur la face supérieure (7) de la collerette (3) obturant hermétiquement l'ouverture principale (4) de la capsule (1a,1b), **en ce qu'**elle comporte un opercule préhensible (11) imperméable aux liquides, fixé sur la face externe (12) de la paroi de fond (5) et obturant le perçage traversant (10a,10b), le dit opercule préhensible (6) comportant des moyens de préhension (13) lui permettant d'être détaché de la paroi de fond (5) en découvrant le perçage traversant (10a,10b), et **en ce qu'**elle comporte un filtre (14) perméable aux liquides et fixé dans le corps (2) de la capsule (1a,1b) en appui contre la face interne (15) de la paroi de fond (5) de la dite capsule (1a,1b) obligeant tout liquide s'écoulant à travers le perçage (10a,10b) depuis l'intérieur de la capsule (1a,1b) à traverser le filtre (14).

5. Procédé de fabrication d'une capsule selon l'une quelconque des revendications précédente, **caractérisé en ce qu'**il comprend les étapes de :
- fabrication (21) du corps (2) de la capsule (1a,1b),
- fabrication (21) des moyens de détrompage (8) de façon concomitante ou non avec l'étape de fabrication (21) du corps (2) de la capsule (1a,1b),
- perçage (25) de la paroi de fond (5) de la capsule (1a,1b) selon :
o soit une première position (A) décalée par rapport à l'axe principal (XX') de la capsule (1a),
o soit au moins une deuxième position (B) autrement décalée par rapport à l'axe principal (XX') de la capsule (1 b),
- pose et fixation (30) des moyens d'obturation amovibles (11) du perçage traversant (10a,10b) contre la face externe (12) de la paroi de fond (5),
- remplissage (40) de la capsule (1 a,1 b) par :
o soit une première infusion introduite dans le corps (2) de la capsule (1a) dont le perçage traversant (10a) est disposé selon la première position (A),
o soit une seconde infusion, différente de la première infusion, introduite dans le corps (2) de la capsule (1b) dont le perçage traversant (10b) est disposé selon la deuxième position (B),
- pose et fixation (45) des moyens d'obturation (6) de l'ouverture principale (4).

6. Procédé selon la revendication 5, **caractérisé en ce que** l'étape de fabrication (21) du corps (2) de la capsule (1a,1b) et les moyens de détrompage (8) sont réalisés par thermoformage à partir d'une bande de film thermoplastique (20), et **en ce qu'**ultérieurement à l'étape de pose et de fixation (45) des moyens d'obturation (6) de l'ouverture principale (4), le procédé comprend une étape de découpage (50) de la capsule (1 a,1 b) afin de désolidariser la dite capsule (1a,1b) de la bande de film thermoplastique (20).

7. Procédé selon la revendication 6, **caractérisé en ce que** l'étape de remplissage (40) de la capsule (1a) par la première infusion est réalisé par translation rotative d'une première vis sans fin (43a) supportant l'infusion vers et jusqu'au corps (2) de la capsule (1a), et **en ce que** l'étape de remplissage (40) de la capsule (1 b) par la seconde infusion est réalisé par translation rotative d'une seconde vis sans fin (43b) supportant l'infusion vers et jusqu'au corps (2) de la capsule (1 b).

8. Procédé selon la revendication 7, **caractérisé en ce que** l'opération de perçage (25) de la paroi de fond (5) selon la première position (A) consiste à réaliser un perçage traversant (10a) décalé d'un axe (ZZ') qui est perpendiculaire à l'axe principal (YY') de la rainure (8) et qui passe par l'axe principal (XX') de la dite capsule (1a), et **en ce que** l'opération de perçage (25) de la paroi de fond (5) selon la seconde position (B) consiste à réaliser un perçage traversant (10b) autrement décalé de l'axe (ZZ') qui est perpendiculaire à l'axe principal (YY') de la rainure (8), étant entendu que les première (A) et seconde (B) positions sont symétriques par rapport à cet axe (ZZ') perpendiculaire à l'axe principal (YY') de la rainure (8).

9. Dispositif pour mettre en oeuvre le procédé de fabrication d'une capsule selon l'une quelconque des revendications 5 à 8, **caractérisé en ce qu'**il comprend au moins :
- des moyens de fabrication (22,23,24) du corps (2) de la capsule (1a,1b).
- des moyens de fabrication (22,23,24) des moyens de détrompage (8),
- des moyens de perçage (26) de la paroi de fond (5) de la capsule (1a,1b) :
o soit à une première position (A) décalée par rapport à l'axe principal (XX') de la capsule (1 a),
o soit à au moins une seconde position (B) autrement décalée par rapport à l'axe principal (XX') de la capsule (1b),
- des moyens de pose et de fixation (34) des moyens d'obturation amovibles (11) du perçage traversant (10a,10b) contre la face externe (12) de la paroi de fond (5) de la capsule (1a,1b),
- des premiers moyens de remplissage (44a) pour remplir la capsule (1a) d'une première infusion lorsque le perçage traversant (10a) est disposé selon la première position (A),
- au moins des second moyens de remplissage (44b) pour remplir la capsule (1 b) d'une seconde infusion lorsque le perçage traversant (10b) est disposé selon la seconde position (B), et
- des moyens de pose et de fixation (48,45) des moyens d'obturation (6) de l'ouverture principale (4).

10. Dispositif selon la revendication 9, **caractérisé en ce qu'**il comporte des moyens de thermoformage (22) du corps (2) de la capsule (1a,1b) à partir d'une bande de film thermoplastique (20), ces moyens de thermoformage (22) incluant les moyens de fabrication des moyens de détrompage (8), et **en ce qu'**il comporte des moyens de découpage (50) de la capsule (1a,1b) permettant, après la fixation des moyens d'obturation (6) de l'ouverture principale (4), de désolidariser la dite capsule (1a,1b) de la bande de film thermoplastique (20).

11. Dispositif selon l'une quelconque des revendications 9 et 10, **caractérisé en ce que** les moyens de perçage (26) de la paroi de fond (5) de la capsule (1a,1b) soit à la première position (A), soit à la au moins seconde (B) position, comprennent un système de découpe adapté (26) et un système de déplacement du dit système de découpe (26) entre une première disposition (C) apte à réaliser le perçage (10a) à la première position (A), et une seconde disposition (D) apte à réaliser le perçage (10b) à la seconde position (B).

12. Dispositif selon l'une quelconque des revendications 9 à 11, **caractérisé en ce que** les premier moyens de remplissage (44a) pour remplir la capsule (10a) d'une première infusion comprennent une cuve (41 a) remplie de la première infusion dont la partie inférieure présente une buse de remplissage (42a) à l'intérieure de laquelle une vis sans fin (43a) reliée à la cuve (41a) forme distributeur de la première infusion dans la capsule (1a) par translation de cette vis sans fin (43a) transportant la première infusion vers et dans le corps (2) de la capsule (1a), **en ce que** les second moyens de remplissage (44b) pour remplir la capsule (1b) d'une seconde infusion comprennent une cuve (41 b) remplie de la seconde infusion dont la partie inférieure présente une buse de remplissage (41 b) à l'intérieure de laquelle une vis sans fin (43b) reliée à la cuve (41 b) forme distributeur de la seconde infusion dans la capsule (1 b) par translation de cette vis sans fin (43b) transportant la seconde infusion vers et dans le corps (2) de la capsule (1 b), et **en ce qu'**il comprend un système de commande de l'activation des premier (44a) ou des second (44b) moyens de remplissage selon que le perçage (10a,10b) de la paroi de fond (5) de la capsule (1a,1b) est à la première (A) ou à la seconde (B) position.

13. Chambre d'infusion apte à recevoir la capsule selon les revendications 1 à 4, **caractérisée en ce qu'**elle comporte une première voie hydraulique d'écoulement (62a) de l'infusion liquide apte à être reliée au perçage traversant (10a) de la capsule (1a) lorsque ce perçage traversant (10a) est dans une première position (A), et **en ce qu'**elle comporte une seconde voie hydraulique (62b) distincte hydrauliquement de la première voie hydraulique (62a), apte à être reliée au perçage traversant (10b) de la capsule (1b) lorsque ce perçage traversant (10b) est dans une seconde position (B) différente de la première position (A) et **en ce que** les première (62a) et seconde (62b) voies hydraulique sont aptes à ne pas assurer leur fonction d'écoulement de la boisson lorsqu'elles ne sont pas reliées au perçage traversant correspondant (10a,10b).

14. Chambre d'infusion selon la revendication 13, **caractérisée en ce que** les première (62a) et seconde (62b) voies hydrauliques sont fixes, et **en ce que** les extrémités respectives (63a,63b) des première (62a) et seconde (62b) voies hydrauliques comportent un bord souple et étanche (63a,63b) permettant d'une part d'assurer l'écoulement de la boisson hors de la capsule (1a,1b) lorsque la première (62a) ou la seconde (62b) voie hydraulique est reliée au perçage traversant correspondant (10a,10b) de la capsule (1a,1b), et d'autre part de s'apposer contre la paroi de fond (5) de la capsule (1a,1b) sans l'endommager lorsque la première (62a) ou la seconde (62b) voie hydraulique n'est pas reliée au perçage traversant correspondant (10a,10b) de la capsule (1a,1b).

15. Chambre d'infusion selon l'une quelconque des revendications 13 et 14 adaptée à une capsule selon l'une quelconque des revendications 3 et 4, **caractérisée en ce que** la première voie hydraulique (62a) se trouve en regard de du perçage traversant (10a) dans sa première position (A) lorsque la capsule (1a) est en place dans la dite chambre d'infusion (60), et **en ce que** la seconde voie hydraulique (62b) se trouve en regard du perçage traversant (10b) dans sa seconde position (B) lorsque la capsule (1 b) est en place dans la dite chambre d'infusion (60).

16. Distributeur d'infusion, notamment de thé et/ou de café, **caractérisé en ce qu'**il comporte une chambre d'infusion selon l'une quelconque des revendications 13 à 15.
